# FASCICULE DE BREVET EUROPEEN

(11) **EP 2 520 477 B1**
(45) Date de publication et mention de la délivrance du brevet: **12.03.2014**
(21) Numéro de dépôt: 12002647.1
(22) Date de dépôt: 16.04.2012
(51) Int. Cl.: B62K 25/02

(54) **Axe de blocage rapide destiné à être utilisé sur un cycle**
Schnellblockierachse zur Verwendung bei einem Fahrrad
Rapid locking pin for use on a cycle

(30) Priorité: 02.05.2011 FR 1101358
(43) Date de publication de la demande: 07.11.2012
(73) Titulaire: MAVIC S.A.S., 74370 Metz-Tessy (FR)
(72) Inventeur: Normand, Joseph, 73420 Mercy (FR); Mercat, Jean-Pierre, 74850 Charanod (FR)
(74) Mandataire: Rambaud, Pascal

(56) Documents cités:
- WO-A1-97/21586

## Description

L'invention concerne un axe de blocage rapide d'un élément sur un autre, et notamment d'une roue sur un cadre de cycle ou autre engin.

De tels axes de blocage sont utilisés de façon courante notamment pour pouvoir monter et démonter de façon très rapide une roue sur un cadre de vélo ou sur une fourche. ils sont utilisés également dans le domaine du cycle par exemple pour immobiliser la tige de selle dans le tube de selle.

Les axes de blocage de roue connus comprennent une longue tige qui traverse le moyeu de la roue avec de chaque côté du moyeu une extrémité de tige en saillie. L'une des extrémités de la tige présente une butée de serrage, généralement réglable le long de la tige. Il s'agit habituellement d'un embout taraudé ou d'un écrou qui est vissé à l'extrémité filetée de la tige.

L'autre extrémité de la tige présente une autre butée de serrage mobile, dont le mouvement le long de la tige est commandé par un levier articulé à l'extrémité de l'axe et portant une came excentrique. le levier et sa came font varier la distance séparant les deux butées. Ils permettent en particulier de serrer d'un seul coup les deux pattes d'attache de la fourche entre les extrémités du moyeu et les butées de serrage.

Le levier et sa came excentrique engendrent au niveau de la butée un mouvement avec une composante axiale dirigée selon la direction générale de la tige.

Le document WO 97/21586 décrit un axe de blocage selon l'art antérieur.

Pour des raisons de sécurité, des ergots de sécurité sont ménagés sur les pattes de fourche (ou sur les pattes du cadre). Ces ergots font saillie des surfaces du cadre ou de la fourche qui reçoivent les butées de serrage. Ils sont placés de telle façon que, pour amener la roue en place, il faille faire reculer les butées pour permettre le passage par-dessus les ergots. La hauteur de ces ergots ne dépasse pas quelques millimètres et légèrement supérieure à la course de réglage générée par la came. Ainsi, si consécutivement à une fixation adéquate de la roue sur le vélo, c'est-à-dire par la fermeture du levier et avec une force de serrage satisfaisante, se produit une ouverture du levier et donc un desserrage de l'axe de blocage, alors la désolidarisation complète de la roue du vélo ne se produira pourtant pas. En effet, la liaison roue/vélo sera lâche mais la roue gardera sa place car les ergots de sécurité retiendront les butées de serrage en place, et par conséquent la roue. Cette liaison lâche roue/vélo peut être suffisante pour que le cycliste s'arrête sans faire de chute, ou du moins permet d'éviter les chutes les plus graves.

La présence des ergots de sécurité multiplie les opérations nécessaires au montage/démontage d'une roue sur un vélo. Notamment, en plus de la manipulation du levier, il est nécessaire de visser/dévisser une au moins des butées de serrage, en général, l'écrou.

Le vissage/dévissage des butées de serrage a plusieurs conséquences négatives sur l'utilisation des axes de blocage rapide conventionnels.

Tout d'abord, cela augmente le temps nécessaire au montage et au démontage de la roue. L'augmentation du temps de montage ou démontage s'accompagne aussi d'une manipulation compliquée, car il est nécessaire d'agir avec les deux mains sur l'axe de serrage, une sur le levier, l'autre sur l'écrou. Il ne reste alors plus de possibilité pour tenir la roue, ou le cadre.

Mais aussi, et c'est peut être plus important, cela introduit une imprécision sur la force de serrage réellement utilisée pour la fixation de la roue et cela rend difficile la reproductibilité du serrage. En effet, il est difficile après avoir dévissé l'écrou et démonter la roue, de le revisser exactement du même nombre de tours lorsqu'on doit remonter la roue.

Le brevet US 5,673,925 décrit un axe de blocage qui vise à remédier une partie des problèmes des dispositifs conventionnels. Dans cette construction, l'une des butées de blocage, celle qui ne comprend pas le levier, est équipée d'une bague « expansible ». En réalité, l'écrou dans lequel est vissée la tige longitudinale de l'axe de blocage comprend une chape en forme de T. Entre cette chape et la patte de la fourche, s'intercale un collier qui comprend des secteurs angulaires de longueurs différentes. Suivant la position angulaire du collier, les extensions de la chape en forme de T sont en contact avec les différents secteurs angulaire du collier. Ainsi il est possible de changer l'écartement entre les deux butées de serrage sans dévisser l'écrou.

Un tel dispositif n'est toujours pas optimal, dans la mesure où il nécessite une manipulation à deux mains. D'autre part, dans ce dispositif, la manipulation du levier et celle de la bague sont complètement indépendantes l'une de l'autre, ce qui peut générer des erreurs lors de la manipulation. En effet, l'utilisateur peut replier le levier quelque soit la position de la bague, alors que pour que le serrage soit correctement réalisé, il faut d'abord placer la bague dans la bonne position puis replier le levier.

Un objectif de la présente invention est de fournir un axe de blocage rapide qui remédie aux inconvénients précités et notamment de permettre le montage/démontage d'une roue de bicyclette sans nécessiter le dévissage d'aucune des deux butées de serrage.

Un autre objectif de l'invention est la fourniture d'un axe de blocage rapide comportant au moins une butée de serrage équipée d'un levier articulé comportant une came qui soit facile à manipuler d'une seule main.

Un autre objectif de l'invention est la fourniture d'un axe de blocage rapide qui est susceptible de rester en position d'ouverture sans intervention manuelle continue de l'utilisateur de façon à rendre plus aisé le montage/démontage d'une roue d'un cadre de vélo.

Un autre but de l'invention est de proposer un levier dont la position du levier révèle sans ambiguïté la position de blocage de la tige.

D'autres buts et avantages de l'invention apparaîtront au cours de la description qui va suivre, cette description étant donnée toutefois à titre indicatif et non limitatif.

A cet effet, l'invention propose un axe de blocage rapide comprenant une tige longitudinale, une première butée de serrage comportant une première surface de butée externe, ladite première butée étant placée à la première extrémité de la tige; une seconde butée de serrage placée à la seconde extrémité de la tige; un levier monté articulé sur la première extrémité de la tige, le levier présentant une came; un organe d'appui mobile qui est intercalé entre la périphérie de la came et la première surface de butée externe, ledit organe d'appui mobile comportant une première surface d'appui, appelée surface de blocage, qui est susceptible de venir en contact avec la came et qui est séparée de la première surface de butée externe d'une distance D1 ; ledit organe d'appui mobile comprenant en outre une deuxième surface d'appui, appelée surface de déblocage, qui est susceptible de venir en contact avec la came et qui est séparé de la première surface de butée externe d'une distance D2 inférieure à D1.

L'invention propose également un axe de blocage qui en plus des caractéristiques listées dans le paragraphe précédent comprend toute combinaison techniquement admissible des caractéristiques listées ci-dessous :
- la différence entre D1 et D2 est comprise entre 2 et 4 mm, en particulier sensiblement égale à 3 mm,
- l'organe d'appui mobile est déplaçable entre une position de blocage au cours de laquelle la came est en contact avec la surface de blocage et une position de déblocage dans laquelle la came est en contact avec la surface de déblocage,
- l'organe d'appui mobile est mobile en translation,
- le levier est mobile en rotation entre une position repliée et une position déployée et en ce que des moyens sont prévus pour empêcher l'organe d'appui mobile de passer de la position de blocage à la position de déblocage lorsque le levier est en position replié,
- des moyens sont prévus pour empêcher un déplacement intempestif de l'organe d'appui mobile lorsque le levier est en position déployée.

L'invention sera mieux comprise en se référant à la description ci-dessous et aux dessins en annexe qui en font partie intégrante.
La figure 1 représente un vélo selon l'invention.
La figure 2 représente en vue de face un axe de blocage selon un premier mode non limitatif de mise en oeuvre de l'invention.
La figure 3 représente une coupe transversale partielle de l'axe de blocage de la figure 2 en position fermée.
La figure 4 représente une deuxième coupe transversale partielle de l'axe de blocage de la figure 3 selon un plan de coupe perpendiculaire au plan de coupe de la figure 3.
La figure 5 représente une vue similaire à la figure 3 en position semi-ouverte.
La figure 6 représente une vue similaire aux figures 3 et 5 en position ouverte.
La figure 7 représente une vue en perspective de l'organe d'appui mobile.

Les figures représentent un axe de blocage prévu pour l'assemblage d'une roue sur le cadre d'un cycle et il est vrai que l'axe de blocage selon l'invention se prête particulièrement à cette utilisation. Toutefois, il est entendu que l'invention peut trouver d'autres applications en tant que pièce de blocage sur un cycle.

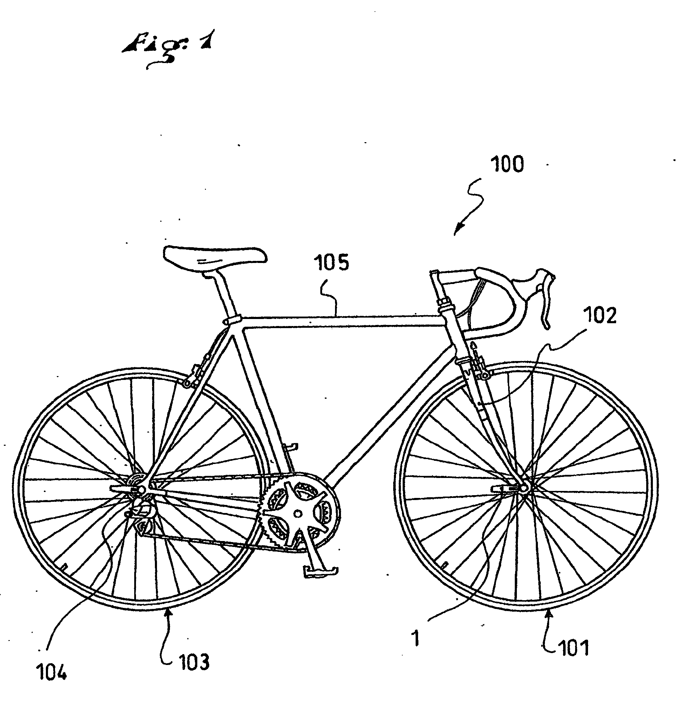

La figure 1 décrit un vélo 100 selon l'invention. Celui-ci est équipé d'une roue avant 101 retenue dans les deux bras de la fourche 102 grâce à un premier axe de blocage rapide 1 selon l'invention. La roue arrière 103 est fixée entre les pattes arrière 104 du cadre 105 à l'aide d'un deuxième axe de blocage rapide selon l'invention. Les deux axes de blocage rapide peuvent être identiques et sont décrits en détail plus loin.

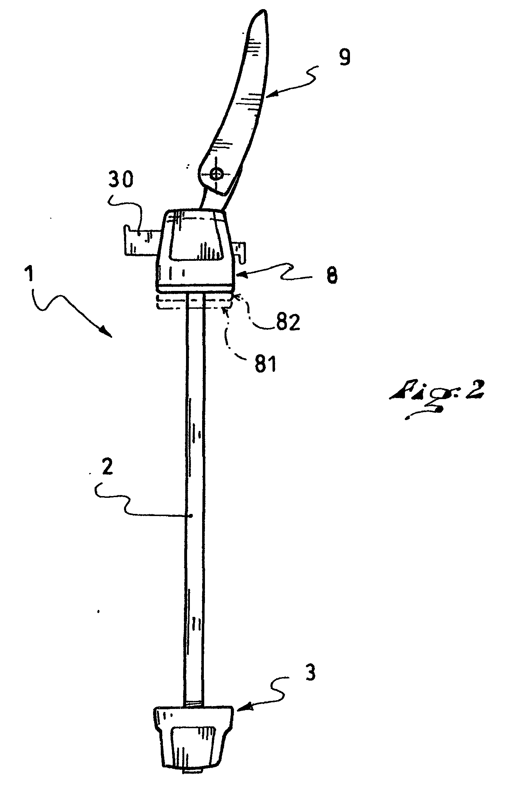

L'axe de blocage représenté en figure 2 comporte une tige 2 effilée qui définit une direction longitudinale. De façon connue, cette tige est prévue pour être engagée dans un orifice traversant de l'arbre central du moyeu.

L'axe de blocage rapide comprend au niveau de la première extrémité de la tige 2, une première butée de serrage 8. De façon connue, cette première butée de serrage est mobile le long de la tige, et son déplacement peut être commandé par un levier de serrage 9. La première butée peut être placée dans différents états. Ces états sont une position fermée appelée encore position de serrage, et une position semi-ouverte, qu'on peut également appeler position de desserrage, et une position ouverte qui est la position qui permet le démontage de la roue du cadre du vélo. Comme on le verra plus loin, le passage de l'un à l'autre des états se fait par manipulation du levier de serrage 9 et d'un organe d'appui mobile 30.

L'axe de blocage rapide est représenté en position ouverte à la figure 2. Le trait mixte fin référencé 81 sur la figure 2 représente l'emplacement de la première butée de serrage 8 lorsque l'axe de blocage rapide se trouve en position fermée. Le trait mixte fin référencé 82 représente l'emplacement de la butée 8 en position semi-ouverte.

La tige 2 présente à l'autre de ses extrémités une deuxième butée de serrage 3. La position de cette butée le long de la tige est de préférence réglable. Ainsi que cela est illustré, par exemple, la tige 2 présente une zone filetée à son extrémité, et la deuxième butée est un embout 4 taraudé qui est vissé sur cette partie filetée. De préférence, dans ce cas, un joint torique 5 fait office de frein entre le filet de la tige et l'embout. Le joint se trouve dans un logement épaulé de l'embout, et il est retenu par une bague 6 qui est assemblée à l'embout par tout moyen approprié, par exemple vissage et collage. Naturellement, tout autre moyen approprié convient.

Le levier 9 actionne en partie le déplacement de la première butée 8 le long de la première extrémité de la tige 2 par des moyens qui vont maintenant être décrits.

A sa première extrémité, la tige présente une chape 13 qui présente, vue de côté en section transversale une forme de U et dont la surface externe est inscrite dans un cylindre de révolution centré sur l'axe de la tige. Dans le mode de réalisation illustré, la chape 13 est partie intégrante de la tige. Ceci n'est pas limitatif, et la chape pourrait être une pièce usinée indépendamment de la tige et rapportée à son extrémité.

La première butée 8 présente une bague de serrage cylindrique 10 percée d'un orifice central 12. La bague de serrage 10 est montée coulissante le long de la chape. Elle présente sur l'extérieur de la chape un rebord 15 qui forme une surface externe d'appui, qu'on appellera dans la suite de cet exposé, première surface de butée externe 60. C'est la première surface de butée externe qui est au contact des pattes de fixation du cadre, ou de la fourche, du vélo lorsque la roue est montée sur le vélo. La deuxième butée 3 comporte, quant à elle, une deuxième surface de butée externe 61 qui également sera au contact du cadre ou de la fourche du vélo. Le réglage de la distance séparant la première surface de butée externe 60 de la deuxième surface de butée interne 61 permettra l'adaptation de l'axe de blocage rapide à différentes roues respectivement à différents vélos.

De préférence, la bague 10 présente une forme de cuvette dont l'ouverture est orientée vers la deuxième butée 3, et dont le rebord 15 forme une face de serrage contre le cadre. La bague 10 est retenue par un filetage 17 ménagé dans le corps de la première butée. Un ressort 16 est placé entre un épaulement 18 de la chape 13 et le fond de la cuvette que constitue la bague 10.

L'orifice central 12 de la bague est ajusté au diamètre extérieur de la chape 13. La bague 10 se trouve ainsi guidée selon une direction longitudinale.

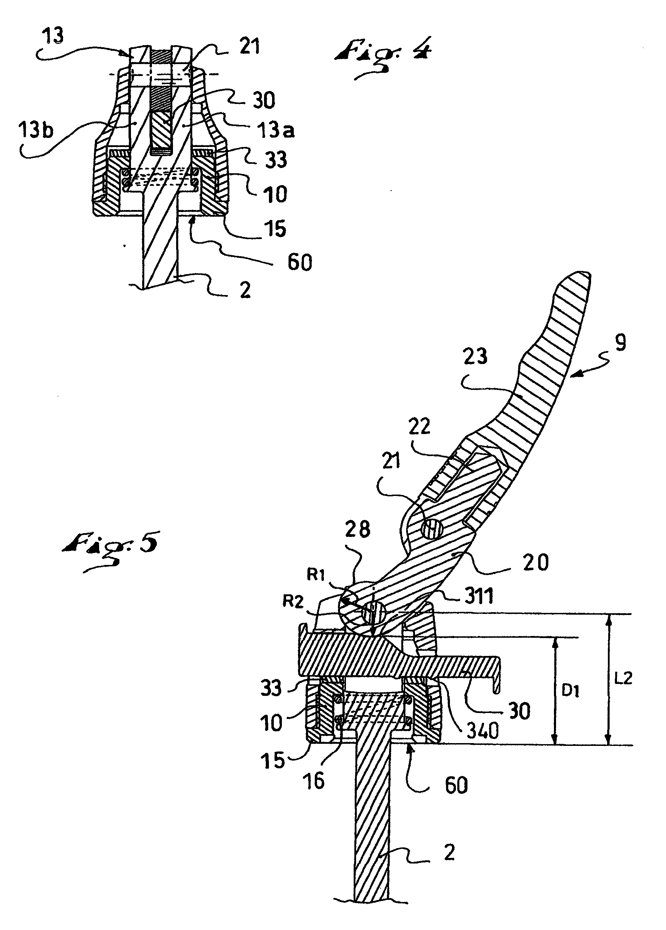

Comme on peut voir sur la figure 4, les branches 13a et 13b de la chape définissent entre elles un logement délimité par deux faces sensiblement parallèles.

Dans ce logement est engagé un basculeur 20 du levier 9. Le basculeur 20 est rotatif autour d'un axe transversal 21 porté par les deux branches 13a et 13b du basculeur. Le basculeur présente une épaisseur constante au moins dans sa zone comprise entre les deux branches de la chape 13. Cette épaisseur est sensiblement égale à la distance comprise entre les deux branches de la chape.

Le basculeur 20 présente vers l'extérieur une branche 22 qui est prolongée par une palette de manoeuvre 23. Dans le mode de réalisation représenté, la palette est un élément distinct du basculeur qui est enfilé sur la branche du basculeur et assemblé par une goupille, une vis ou tout autre moyen approprié, par exemple par clipage. De plus, un bloc de matériau déformable peut être prévu entre le basculeur et la palette pour rattraper de façon élastique les jeux entre ces deux éléments.

Ce mode de construction permet avantageusement de choisir pour le basculeur et pour la palette des matériaux différents, et en particulier, il est possible de réaliser le basculeur en un matériau prévu pour supporter des contraintes de compression élevées et selon un mode de fabrication très simple. Par exemple, le basculeur, qui présente une épaisseur constante, est réalisé en acier inoxydable, par simple découpe d'une tôle, éventuellement traitée. La palette peut être réalisée par exemple en alliage léger ou en matière plastique.

De façon également avantageuse, l'axe 21 de rotation du basculeur est prévu pour être sollicité au cisaillement par le basculeur, et par réaction par les branches de la chape. Comme ces éléments sont juxtaposés, l'axe 21 travaille dans de bonnes conditions mécaniques, et il est possible pour cette raison de lui donner un diamètre relativement faible. Il en résulte une réduction des frottements à ce niveau.

A l'opposé de la branche 22, c'est-à-dire dans la zone de la chape 13, le basculeur 20 présente une zone périphérique, excentrique qui est prévue pour agir comme une came 28. La distance entre la périphérie de la came 28 et l'axe 21 augmente en correspondance depuis un premier secteur situé dans le prolongement de la branche jusqu'à un autre secteur situé approximativement à la perpendiculaire. Tout moyen approprié convient pour réaliser la came 28, par exemple une courbure variable, ou bien plusieurs courbures constantes successives, ou bien une seule courbure excentrée. On a obtenu de bons résultats avec une telle distance variant entre 4 et 5 millimètres environ, soit une course de 1 millimètre de distance sur un angle de 120 degrés approximativement de la came. Toutefois ces chiffres ne sont pas limitatifs.

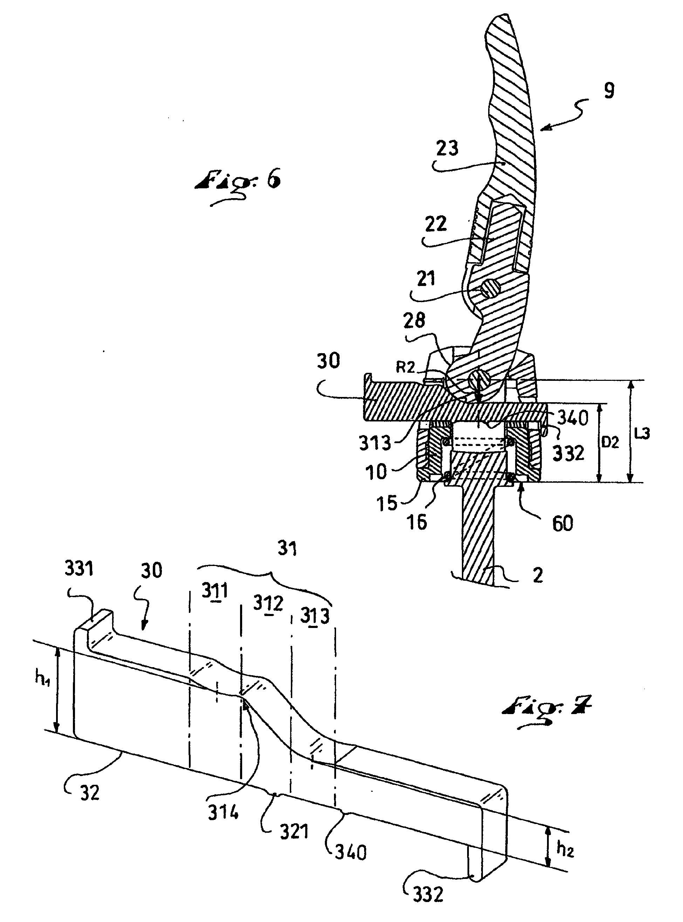

Un organe d'appui mobile 30 est situé entre les branches de la chape 13, entre la came 28 du basculeur et la bague 10. Cet organe d'appui mobile 30 prend la forme d'une poutre. Cette poutre qui est représentée en perspective en figure 7 présente une épaisseur constante sur une majeure partie de sa longueur de façon à pouvoir coulisser entre les branches de la chape. En vue de face, l'organe 30 présente globalement la forme combinée de deux rectangles de hauteurs différentes séparés par un trapèze. La hauteur h1 de la partie gauche de l'organe d'appui mobile 30 est plus importante que la hauteur h2 de la partie droite.

De préférence, la zone centrale de la partie supérieure 31 de l'organe a une forme particulièrement étudiée et elle est prévue pour servir de contre-appui à la came 28. Cette zone centrale 31 qui est matérialisée par les traits mixtes fins à la figure 7 se décompose en trois parties distinctes, une surface de blocage 311, une surface de déblocage 313 et une rampe 312. Les surfaces de blocage 311 et de déblocage 312 sont concaves. Le rayon de courbure de ces surfaces est sensiblement voisin du plus grand rayon de courbure de la came 28 ou légèrement supérieur pour permettre un léger fléchissement de la poutre et garder une surface d'appui quasi linéique quand la came 28 est au contact de ces parties. La rampe 312 assure la liaison entre les surfaces de blocage 311 et de déblocage 313. Au niveau de sa jonction avec la surface de blocage 311, elle constitue un mont 314 centré sur un zone d'inflexion du profil de la partie supérieure 31 de l'organe 30.

Le fait de choisir, pour les rayons de courbure des surfaces 311 et 313, des rayons voisins de celui de la came 28 permet avantageusement de réduire la pression de contact entre le basculeur et l'organe d'appui mobile 30. De façon connue, cette pression dépend en effet de la différence de la courbure des éléments en contact.

La partie inférieure 32 de l'organe d'appui mobile 30 est prévue pour exercer un appui contre la bague de serrage 10 selon la direction longitudinale de la tige. Dans le mode de réalisation représenté, cet appui s'opère par l'intermédiaire d'une rondelle 33 dont le diamètre intérieur est sensiblement égal au diamètre extérieur de la chape 13, et dont le diamètre extérieur est voisin du diamètre extérieur de la bague 10. La rondelle est un élément de pression, réalisé dans tout matériau approprié, par exemple en acier inoxydable. Grâce à la rondelle 33, la bague 10 peut être réalisée en alliage léger, par exemple en alliage d'aluminium.

La partie inférieure 32 de la poutre présente un ergot 321 en saillie par rapport reste de la partie inférieure. Cet ergot 321 assure la mise en place correcte et le maintien de la poutre au dessus de la rondelle. En effet, lors de l'utilisation et comme nous le verrons plus loin, du coulissement de l'organe 30, l'ergot 321 ne peut pas s'échapper en dehors de l'ouverture centrale de la rondelle 33.

L'organe d'appui mobile 30 peut être réalisé par découpe d'une tôle d'acier inoxydable, ou de tout autre matériau résistant au matage et à la flexion.

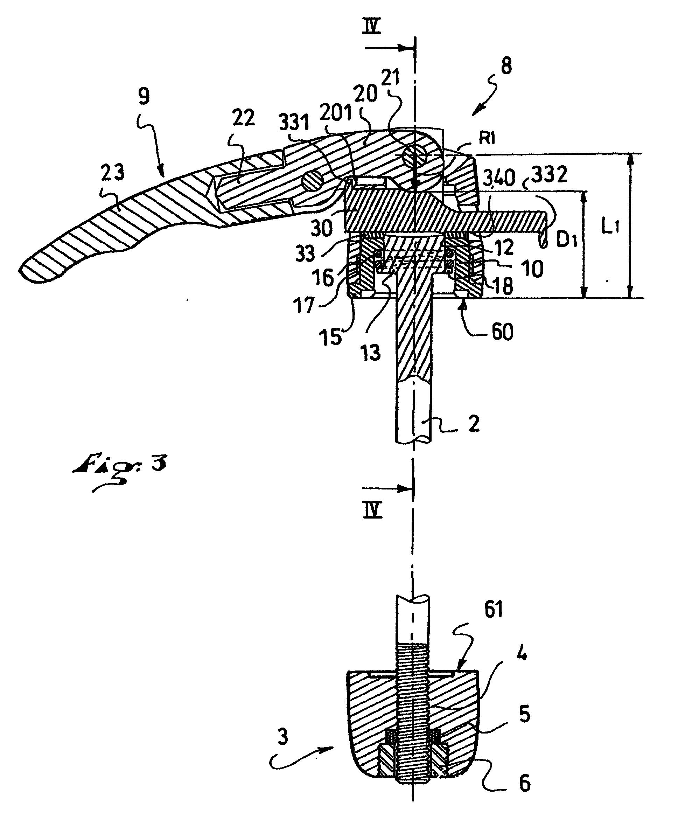

Les figures 3, 5 et 6 permettent de comprendre la suite de manipulations nécessaires pour faire passer l'organe de blocage rapide depuis la position fermée à la position ouverte et vice-versa. A la figure 3, l'axe de blocage rapide est en position fermée, ce qui correspond à la position qu'il prend lorsque la roue est fermement maintenue dans la cadre ou la fourche du vélo. Dans cette position, l'organe d'appui mobile 30 est en position de blocage et le basculeur 20 est replié de façon que la portion de la came 28 ayant la plus grande hauteur de came en appui contre la partie de blocage 311 de l'organe 30.

On notera que l'axe de blocage selon le mode de réalisation décrit dans ces figures est équipé de moyens de sécurité qui en empêchent l'ouverture accidentelle. Ces moyens comprennent un logement 201 placé sous le basculeur 20 et une saillie 331 issue de l'extrémité de la portion de blocage de l'organe 30. Lorsque le levier 9, et par conséquent le basculeur 20, sont replié, la saillie 331 est reçue dans le logement 201 et il est impossible que l'organe 30 puisse coulisser tant que le levier reste en position repliée. Les frottements et le creux de l'organe d'appui assure également ce maintien.

Dans la position fermée, la distance L1, séparant l'axe 21 (liaison pivot basculeur/tige) de la première surface de butée externe 60 est très proche de sa valeur maximale, c'est celle qui correspond au plus petit écartement entre les deux surface de butée externe. Cette distance L1 correspond à la distance D1 séparant la partie de blocage 311 et la première surface de blocage 60 additionnée de la hauteur de came maximale R1 de la came 28 (L1= D1 +R1). On notera que la valeur maximale de la distance séparant l'axe 21 de la surface 60 est maximale au passage du point mort haut de la came 28, juste avant (quelques degrés) la position fermée.

Pour pouvoir désassembler la roue du vélo, l'utilisateur manipule le levier 9 jusqu'à ce que ce dernier se retrouve dans sa position déployée, comme cela est représenté à la figure 5. La figure 5 correspond à la position semi-ouverte de l'axe de blocage rapide. Dans cette position, la distance L2 (axe 21 - surface 60) est réduite par rapport à la distance équivalente L1. La réduction (L1-L2) correspondant exactement à la différence existant entre les hauteurs de came maximale R1 et minimale R2.

La différence R1-R2 est choisie pour que la manipulation du levier reste relativement aisée pour l'utilisateur. Dans l'exemple décrit, on choisi une différence comprise entre 1 et 3 mm, de préférence de l'ordre de 2 mm. En position semi-ouverte la distance séparant les deux surfaces d'appui externe (60,61) de l'axe de blocage rapide est légèrement supérieure à l'encombrement axial du moyeu de la roue additionné des épaisseurs des bras du cadre, respectivement de la fourche du vélo. Ainsi, la fixation de la roue est lâche. Cependant, si le vélo est pourvu d'ergots de sécurité, en position semi-ouverte du blocage rapide, la roue n'est pas complètement désolidarisée du vélo. En effet, la distance entre les deux surfaces d'appui externe 60, 61 reste inférieure à l'encombrement axial du moyeu de la roue additionné des épaisseurs des bras du cadre (fourche) et de la hauteur des ergots de sécurité.

Dans ces conditions, un passage intempestif du levier 9 dans sa position déployée n'occasionne pas systématiquement une chute pour le cycliste, dans la mesure où le maintien, certes lâche, de la roue sur le vélo permet au cycliste de s'arrêter sans dommage.

Pour passer de la position semi-ouverte (figure 5) à la position ouverte représentée à la figure 6, l'utilisateur exerce une pression sur l'extrémité de déblocage 332 et fait coulisser l'organe d'appui mobile 30 en position de déblocage alors que le levier n'est pas manoeuvré et qui reste dans sa position déployée. On notera que la position déployée de levier 9 offre un point d'appui pour la manipulation de l'organe d'appui mobile. En effet, l'utilisateur peut facilement exercer une pression avec le pouce sur l'extrémité 332 tout en maintenant le levier des quatre autres doigts de la même main. La manipulation l'axe de blocage rapide de l'invention d'une seule main est bien entendu un avantage non négligeable de l'invention par rapport à l'art antérieur.

De préférence, des moyens sont prévus pour empêcher le déplacement intempestif de l'organe d'appui mobile 30, notamment lorsque le levier 9 se trouve en position déployée. Ces moyens sont constitués par un bossage 340 placé sur la surface inférieure 32 de l'organe d'appui mobile 30. Lorsque le levier 9 est en position déployée, ce bossage 340 se trouve à l'extérieur de l'espace délimité par la rondelle 33. Le ressort 16 contraint l'organe d'appui mobile 30 contre la rondelle 33 et normalement les frottements empêche un glissement libre de l'organe d'appui. Le bossage 340 à également pour fonction d'empêcher le coulissement non voulu de l'organe 30 à partir de sa position de blocage.

Dans la position ouverte, la distance L3 séparant l'axe 21 de la première surface d'appui externe 60 est minimale. Ainsi, la distance séparant les deux surfaces de butée externe 60, 61 est supérieure à l'encombrement axial du moyeu de la roue additionné des épaisseurs des bras de cadres ou de fourche et des hauteurs des ergots de sécurité. Il est donc possible de retirer la roue du vélo sans avoir à dévisser la deuxième butée 3. La distance L3 est égale à la distance D2 séparant la partie de déblocage 313 de la surface d'appui externe 60, additionnée de la hauteur de came minimale R2 de la came 28 (L3 = D2 + R2). La distance L3 est réduite par rapport à la distance L2 d'une valeur « L2-L1 » qui est égale à la différence D2-D1, cette dernière étant rigoureusement égale à la différence entre la hauteur h1 de la portion de blocage de l'organe 30 et la hauteur h2 de la portion de déblocage. La différence entre D1 et D2 est comprise entre 2 et 4 mm, en particulier sensiblement égale à 3 mm.

On notera également que la position ouverte de la première butée 8 est une position stable et que l'utilisateur peut relâcher la pression sur l'organe mobile d'appui ainsi que la prise en main du levier 9 sans que la butée ne quitte d'elle-même la position ouverte. Cette caractéristique participe à facilité et au confort d'utilisation de l'axe de blocage selon l'invention.

Pour pouvoir à nouveau assembler la roue au vélo, l'utilisateur s'assure que le levier est en position déployée. II s'assure également que l'organe d'appui mobile est en position de déblocage. Si ce dernier n'est pas dans cette position et que la fourche et le cadre du vélo sont équipés avec des ergots de sécurité, alors il ne sera pas possible d'insérer la roue dans son emplacement. Pour remédier à cela, l'utilisateur n'aura qu'à faire coulisser l'organe d'appui mobile jusque dans la position de déblocage. On notera que si le vélo n'est pas équipé d'ergot de sécurité, il sera possible pour l'utilisateur d'insérer la roue, mais il ne lui sera pas possible de fermer correctement le levier. En effet, les moyens de sécurité, vus plus haut, font que tant que la saillie 331 ne peut pas être reçue dans le logement 201, le levier ne peut pas prendre sa position fermée.

Par conséquent, une fois que l'axe de blocage est en position ouverte, l'utilisateur position la roue dans son emplacement, fait coulisser l'organe d'appui mobile en position de blocage, puis bascule le levier en position repliée.

D'autres variantes de construction sont encore possibles sans pour autant sortir du cadre de l'invention.

Enfin, comme cela a été dit au début de la description, l'invention peut trouver d'autres applications que les tiges de blocage rapide de roue, et notamment les tiges de blocage de la tige de selle dans le tube de selle, ou d'une façon générale les tiges de serrage rapide d'un collier.

## Revendications

1. Axe de blocage rapide (1) comportant une tige (2) longitudinale, une première butée de serrage (8) comportant une première surface de butée externe (60), ladite première butée (8) étant placée à la première extrémité de la tige (2); une seconde butée de serrage (3) placée à la seconde extrémité de la tige ; un levier (9) monté articulé sur la première extrémité de la tige (2), le levier (9) présentant une came (28); un organe d'appui mobile (30) qui est intercalé entre la périphérie de la came (28) et la première surface de butée externe (60), ledit organe d'appui mobile (30) comportant une première surface d'appui, appelée surface de blocage (311), qui est susceptible de venir en contact avec la came (28) et qui est séparée de la première surface de butée externe (60) d'une distance D1 ; **caractérisé en ce que** ledit organe d'appui mobile (30) comprend une deuxième surface d'appui, appelée surface de déblocage (313), qui est susceptible de venir en contact avec la came (28) et qui est séparé de la première surface de butée externe (60) d'une distance D2 inférieure à **D1.**

2. Axe de blocage rapide selon la revendication 1, **caractérisé en ce que** la différence entre D1 et D2 est comprise entre 2 et 4 mm, en particulier sensiblement égale à 3 mm.

3. Axe de blocage rapide selon l'une des revendications 1 ou 2, **caractérisé en ce que** l'organe d'appui mobile (30) est déplaçable entre une position de blocage au cours de laquelle la came (28) est en contact avec la surface de blocage (311) et une position de déblocage dans laquelle la came (28) est en contact avec la surface de déblocage (313).

4. Axe de blocage rapide selon l'une des revendications 1 à 3, **caractérisé en ce que** l'organe d'appui mobile (30) est mobile en translation.

5. Axe de blocage rapide selon l'une des revendications 1 à 4, **caractérisé en ce que** le levier (9) est mobile en rotation entre une position repliée et une position déployée et **en ce que** des moyens sont prévus pour empêcher l'organe d'appui mobile (30) de passer de la position de blocage à la position de déblocage lorsque le levier est en position replié.

6. Axe de blocage rapide selon l'une des revendications 1 à 5, **caractérisé en ce que** des moyens sont prévus pour empêcher un déplacement intempestif de l'organe d'appui mobile (30) lorsque le levier est en position déployée.

7. Roue équipée d'un axe de blocage rapide selon l'une des revendications précédentes.

## Patentansprüche

1. Schnellblockierachse (1), umfassend eine Längsstange (2), einen ersten Befestigungsanschlag (8), umfassend eine erste äußere Anschlagfläche (60), wobei der erste Anschlag (8) am ersten Ende der Stange (2) angeordnet ist; einen zweiten Befestigungsanschlag (3), der am zweiten Ende der Stange angeordnet ist; einen Hebel (9), der gelenkig auf dem ersten Ende der Stange (2) montiert ist, wobei der Hebel (9) eine Nocke (28) aufweist; ein bewegliches Stützelement (30), das zwischen der Peripherie der Nocke (28) und der ersten äußeren Anschlagfläche (60) angeordnet ist, wobei das bewegliche Stützelement (30) eine erste Stützfläche, Blockierfläche (311) genannt, umfasst, die geeignet ist, mit der Nocke (28) in Kontakt zu kommen, und die von der ersten äußeren Anschlagfläche (60) um einen Abstand D1 getrennt ist; **dadurch gekennzeichnet, dass** das bewegliche Stützelement (30) eine zweite Stützfläche, Deblockierungsfläche (313) genannt, umfasst, die geeignet ist, mit der Nocke (28) in Kontakt zu kommen, und die von der ersten äußeren Anschlagfläche (60) um einen Abstand D2 kleiner als D1 getrennt ist.

2. Schnellblockierachse nach Anspruch 1, **dadurch gekennzeichnet, dass** die Differenz zwischen D1 und D2 zwischen 2 und 4 mm beträgt, im Wesentlichen insbesondere gleich 3 mm ist.

3. Schnellblockierachse nach einem der Ansprüche 1 oder 2, **dadurch gekennzeichnet, dass** das bewegliche Stützelement (30) zwischen einer Blockierposition, während der die Nocke (28) mit der Blockierfläche (311) in Kontakt ist, und einer Deblockierungsposition, in der die Nocke (28) mit der Deblockierungsfläche (313) in Kontakt ist, verschiebbar ist.

4. Schnellblockierachse nach einem der Ansprüche 1 bis 3, **dadurch gekennzeichnet, dass** das bewegliche Stützelement (30) in Translation beweglich ist.

5. Schnellblockierachse nach einem der Ansprüche 1 bis 4, **dadurch gekennzeichnet, dass** der Hebel (9) in Drehung zwischen einer eingefahrenen und einer ausgefahrenen Position beweglich ist, und dass Mittel vorgesehen sind, um das bewegliche Stützelement (30) daran zu hindern, von der Blockierposition in die Deblockierungsposition überzugehen, wenn der Hebel in der eingefahrenen Position ist.

6. Schnellblockierachse nach einem der Ansprüche 1 bis 5, **dadurch gekennzeichnet, dass** Mittel vorgesehen sind, um eine ungewollte Bewegung des beweglichen Stützelements (30) zu verhindern, wenn sich der Hebel in der ausgefahrenen Position befindet.

7. Rad, das mit einer Schnellblockierachse nach einem der vorhergehenden Ansprüche ausgestattet ist.

## Claims

1. Quick-release locking skewer (1) comprising a longitudinal rod (2), a first clamping stop (8) comprising a first outer stop surface (60), the said first stop (8) being placed at the first end of the rod (2); a second clamping stop (3) placed at the second end of the rod; a lever (9) mounted in an articulated manner on the first end of the rod (2), the lever (9) having a cam (28); a movable bearing member (30) which is inserted between the periphery of the cam (28) and the first outer stop surface (60), the said movable bearing member (30) comprising a first bearing surface, called locking surface (311), which is able to come into contact with the cam (28) and which is separated from the first outer stop surface (60) by a distance D1; **characterized in that** the said movable bearing member (30) comprises a second bearing surface, called unlocking surface (313), which is able to come into contact with the cam (28) and which is separated from the first outer stop surface (60) by a distance D2 less than D1.

2. Quick-release locking skewer according to Claim 1, **characterized in that** the difference between D1 and D2 is between 2 and 4 mm, in particular approximately equal to 3 mm.

3. Quick-release locking skewer according to either of Claims 1 and 2, **characterized in that** the movable bearing member (30) is able to move between a locking position during which the cam (28) is in contact with the locking surface (311) and an unlocking position in which the cam (28) is in contact with the unlocking surface (313).

4. Quick-release locking skewer according to one of Claims 1 to 3, **characterized in that** the movable bearing member (30) is movable in translation.

5. Quick-release locking skewer according to one of Claims 1 to 4, **characterized in that** the lever (9) is movable in rotation between a retracted position and a deployed position, and **in that** means are provided for preventing the movable bearing member (30) from passing from the locking position to the unlocking position when the lever is in the retracted position.

6. Quick-release locking skewer according to one of Claims 1 to 5, **characterized in that** means are provided for preventing an untimely movement of the movable bearing member (30) when the lever is in the retracted position.

7. Wheel equipped with a quick-release locking skewer according to one of the preceding claims.
